# EUROPÄISCHE PATENTSCHRIFT

(11) **EP 3 286 065 B1**
(45) Veröffentlichungstag und Bekanntmachung des Hinweises auf die Patenterteilung: **30.01.2019**
(21) Anmeldenummer: 16708383.1
(22) Anmeldetag: 02.03.2016
(51) Int. Cl.: B62D 1/04, B62D 1/28

(54) **ANORDNUNG EINES LENKRADS IN EINEM FÜR AUTONOMES FAHREN GEEIGNETEN KRAFTFAHRZEUG**
ARRANGEMENT OF A STEERING WHEEL IN A MOTOR VEHICLE SUITABLE FOR AUTONOMOUS DRIVING
DISPOSITION D'UN VOLANT DE DIRECTION DANS UN VÉHICULE AUTOMOBILE ADAPTÉ À UNE CONDUITE AUTONOME

(30) Priorität: 23.04.2015 DE 102015207477
(43) Veröffentlichungstag der Anmeldung: 28.02.2018
(73) Patentinhaber: Bayerische Motoren Werke Aktiengesellschaft, 80809 München (DE)
(72) Erfinder: SCHWARZ, Felix, 80333 München (DE); EICHHORN, Julian, 80639 München (DE); KERSCHBAUM, Philipp, 80339 München (DE)
(86) Internationale Anmeldenummer: PCT/EP2016/054365
(87) Internationale Veröffentlichungsnummer: WO 2016/169684

(56) Entgegenhaltungen:
- DE-A1-102013 110 865
- JP-A- S58 170 660
- US-A1- 2013 002 416

## Beschreibung

Die Erfindung betrifft eine Anordnung eines Lenkrads in einem für autonomes Fahren geeigneten Kraftfahrzeug, wobei das Lenkrad aus einer Gebrauchsposition in eine Ruhelage verschwenkbar oder kippbar ist, in welcher der Fahrer des Fahrzeugs weiterhin einen Lenkwunsch durch Verdrehen des Lenkrads vorgeben kann. Zum Stand der Technik wird neben der DE 10 2006 006 995 B4 und der DE 10 2013 110 865 A1 auf die US 2013/0002416 A1 verwiesen.
Grundsätzlich bekannt ist das sog. autonome oder hochautomatisierte Fahren von nicht spurgebundenen Kraftfahrzeugen, welche sich künftig auch ohne Zutun des Fahrers elektronisch gesteuert auf Fahrbahnen im öffentlichen Straßenverkehr bewegen werden. Aus der oben erstgenannten Schrift ist es weiterhin bekannt, dass das Lenkrad des Fahrers, welches beim autonomen Fahren, d.h. wenn der Fahrer dem Fahrzeug keine Lenkbewegung vorgeben muss, nur für eventuelle Noteingriffe des Fahrers benötigt wird, von einer zuvor größeren geometrischen Form in eine kleine geometrische Form bringbar ist, wobei eine solche Formänderung abhängig vom Ein- und Ausschalten eines dort sog. Autopilot-Systems automatisch erfolgt. Ferner ist in der oben letztgenannten US 2013/0002416 A1, offenbarend den Oberbegriff des unabhängigen Anspruchs, ein in Richtung der Lenkrad-Drehachse verschiebbares Lenkrad bekannt, wobei über dieses Verschieben ein autonomer Fahrbetrieb ein- bzw. ausgeschaltet werden kann.

Grundsätzlich bekannt sind ferner kippbare (DE 697 08 735 T2, DE 19 16 652 U) oder verschwenkbare (DE 102 59 684 B4) Lenkrad-Anordnungen, die das Ein- und Aussteigen des Fahrers in das bzw. aus dem Fahrzeug erleichtern sollen. Beim Kippen wird dabei das quasi eine Ebene beschreibende Lenkrad um eine in dieser Ebene oder parallel zu dieser liegende Achse gedreht, während beim Verschwenken ein Verdrehen des Lenkrads um eine im wesentlichen senkrecht zur Lenkrad-Ebene liegende Achse erfolgt.

Mit vorliegender Erfindung soll nun eine für autonomes oder hochautomatisiertes Fahren besonders vorteilhafte Anordnung eines Kraftfahrzeug-Lenkrads aufgezeigt werden (= Aufgabe der vorliegenden Erfindung).
Die Lösung dieser Aufgabe ergibt sich mit den Merkmalen des Anspruchs 1 und besteht in einer Anordnung eines Lenkrads in einem für autonomes Fahren geeigneten Kraftfahrzeug, wobei das Lenkrad einen Lenkrad-Kranz sowie eine bezüglich des Kraftfahrzeugs feststehende Speiche, welche den Lenkrad-Kranz trägt, aufweist, und wobei der Lenkrad-Kranz aus einer Gebrauchsposition in eine Ruhelage verschwenkbar oder kippbar ist. In dieser Ruheposition kann der Fahrer des Fahrzeugs weiterhin einen Lenkwunsch durch Verdrehen des Lenkrad-Kranzes vorgeben, und es schaltet ein Verschwenken oder Kippen des Lenkrad-Kranzes aus der Gebrauchsposition in die Ruhelage einen autonomen Fahrzeug-Betriebsmodus, in welchem sich das Fahrzeug ohne Zutun des Fahrers entlang der Fahrbahn bewegt, ein, während ein Verschwenken oder Kippen des Lenkrad-Kranzes aus der Ruhelage in die Gebrauchsposition diesen autonomen Fahrzeug-Betriebsmodus ausschaltet.

Vorgeschlagen wird somit zum einen, das Lenkrad bzw. den Lenkrad-Kranz während des bzw. für das autonome(n) Fahren(s) in einer solcher Weise in eine Ruheposition zu verlagern, dass der Blick des Fahrers auf die üblicherweise hinter dem Lenkrad liegende und von diesem in dessen Gebrauchsposition teilweise verdeckte Armaturentafel und insbesondere auf einen darin wie üblich vorgesehenen Bildschirm vom Lenkrad in wesentlich geringerem Umfang verdeckt wird. Gleichzeitig kann der Fahrer das Lenkrad in einer solchen Ruheposition in vergleichbarer Weise betätigen, wie er dies aus der Gebrauchsposition des Lenkrads kennt. Dabei wird direkt durch das Kippen oder Verschwenken des Lenkrad-Kranzes der Betriebszustand des autonomen Fahrens eingeschaltet bzw. ausgeschaltet. Wird das Fahrzeug also zunächst vollständig vom Fahrer geführt und befindet sich das Lenkrad somit in der Gebrauchsposition, so wird dann, wenn der Fahrer das Lenkrad bzw. den Lenkrad-Kranz aus dieser Position heraus in dessen sog. Ruhelage kippt oder verschwenkt, der Betriebsmodus des autonomen Fahrens eingeschaltet. Bringt der Fahrer etwas später den Lenkrad-Kranz aus der Ruheposition in die Gebrauchsposition, so wird aufgrund dieser Verlagerung der wie üblich von einer elektronischen Steuereinheit gesteuerte Betriebsmodus des autonomen Fahrens wieder ausgeschaltet. Dabei kann die Lenkrad-Anordnung mit einer Sperrvorrichtung versehen sein, welche ein manuelles Verlagern des Lenkrad-Kranzes durch den Fahrer aus der Gebrauchsposition in die Ruhelage nur dann zulässt, wenn ein autonomer Fahrmodus überhaupt möglich ist, was die zuvor genannte elektronische Steuereinheit erkennen und daraufhin die besagte Sperrvorrichtung geeignet ansteuern kann. Ferner kann zur Erleichterung des Ein- und Aussteigens vorgesehen sein, dass diese Sperrvorrichtung das Kippen oder Verschwenken bei abgestelltem Fahrzeug, d.h. wenn dieses nicht (weiter) bewegt werden soll, erlaubt.
Ein besonderer Vorteil einer soweit vorgeschlagenen Lenkrad-Anordnung ist darin zu sehen, dass der Fahrer in intuitiv einfachster Weise den Betriebsmodus des autonomen Fahrens einschalten und ausschalten kann und gleichzeitig das Lenkrad in eine weniger störende bzw. in die jeweils zugeordnete Position verlagern kann, ohne dass hierfür mehrere Handgriffe oder gar ein aufwändiger motorischer Verstellmechanismus erforderlich ist. Im übrigen sei noch darauf hingewiesen, dass anstelle einer solchen Lenkrad-Anordnung auch ein Verfahren zum Einschalten und Ausschalten eines hochautomatisierten (autonomen) Betriebs- oder Fahrzustands eines Fahrzeugs mit gleichzeitiger Verlagerung des Lenkrads zwischen einer Gebrauchsposition und einer Ruheposition beansprucht werden könnte, d.h. die beanspruchte Lenkrad-Anordnung könnte auch als ein Verfahrensanspruch formuliert werden.

Grundsätzlich kann eine Kipp- oder Schwenkachse, um welche der Lenkrad-Kranz kippbar oder verschwenkbar ist, angepasst an die jeweiligen räumlichen Verhältnisse im Fahrzeug-Innenraum positioniert sein; wegen eines damit erzielbaren größeren Raumgewinns in der Ruhelage ist es jedoch bevorzugt, wenn das Lenkrad bzw. der Lenkrad-Kranz verschwenkbar oder kippbar am einer Nabe des Lenkrads oder einem Befestigungspunkt einer Speiche an der Armaturentafel abgewandten Ende einer oder der Speiche des Lenkrads angebracht ist. Insbesondere wenn das Lenkrad so angeordnet ist, dass eine durch dessen Gebrauchsposition beschriebene erste Ebene zumindest annähernd vertikal ausgerichtet ist (so wie dies bei üblichen Personenkraftwagen der Fall ist) und eine zweite durch die Ruheposition des Lenkrads beschriebene Ebene zumindest annähernd horizontal ausgerichtet ist, welche Ebenen somit einen Winkel in der Größenordnung von 70° bis 110° einschließen können, ist es vorteilhaft, wenn der Lenkrad-Kranz verschwenkbar oder kippbar nahe der oder einer solchen Speiche des Lenkrads angebracht ist, welche in Neutralstellung des Lenkrads (d.h. einer Lenkrad-Drehwinkelposition, in welcher das Fahrzeug geradeaus fährt) in einer zur Längsachse des Fahrzeugs parallelen und sich in Vertikalrichtung erstreckenden und die Lenkrad-Drehachse enthaltenden Ebene zumindest auch in Vertikalrichtung nach unten verläuft. Der vorstehend genannte Winkelbereich ist jedoch keineswegs obligatorisch; vielmehr kann eine erste Ebene des Lenkrads in Gebrauchsposition mit einer durch dessen Ruhelage gebildete zweite Ebene auch Winkel in der Größenordnung von 30° bis 100° einschließen, welche Werte abermals nicht als feste Grenzwerte zu verstehen sind, sondern nur einen gewissen Rahmen abstecken sollen. Im übrigen handelt es sich bei der bevorzugt - aber nicht hierauf beschränkt - einzigen Speiche, über die der Lenkrad-Kranz in irgend einer Weise beispielsweise an der Armaturentafel des Fahrzeugs aufgehängt ist, um eine feststehende Speiche, auf deren ihrem Befestigungspunkt an der Armaturentafel abgewandtem Endabschnitt der Lenkrad-Kranz verdrehbar gelagert ist.lm übrigen kann auch vorgesehen sein, dass der Lenkrad-Kranz zusammen mit zumindest einer Speiche gekippt oder verschwenkt werden kann.

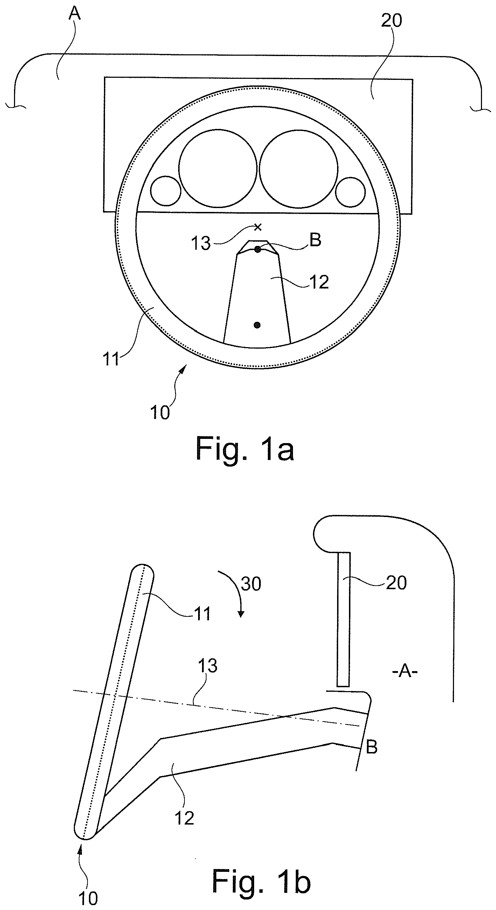

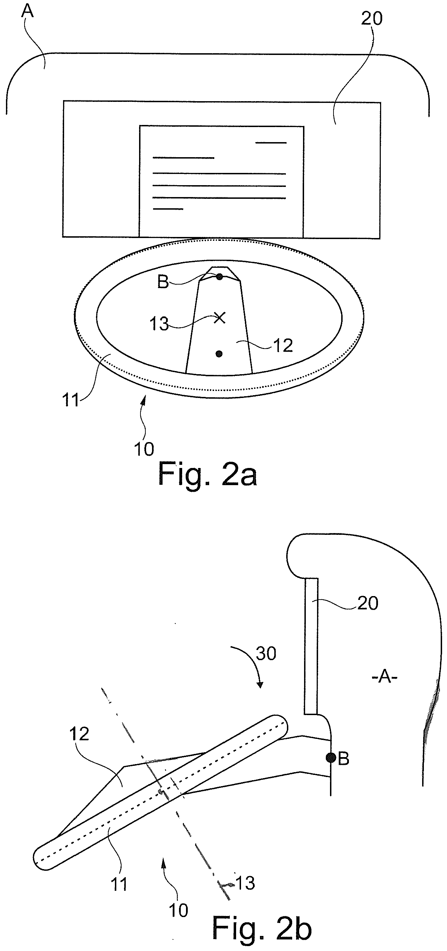

Die beigefügten Prinzipdarstellungen zeigen zunächst in den Figuren 1, 2 eine mögliche erfindungsgemäße Lenkrad-Anordnung in den beiden grundsätzlich möglichen Lenkrad-Positionen, wobei sich das Lenkrad in den Figuren 1a, 1b in der Gebrauchsposition und in den Figuren 2a, 2b in der Ruhelage befindet. Dabei ist den Figuren 1a, 2a die sich dem Fahrer des Fahrzeugs bietende Ansicht dargestellt, während die Figuren 1b, 2b die jeweilige Seitenansicht, d.h. in Fzg.-Querrichtung betrachtet, zeigen.

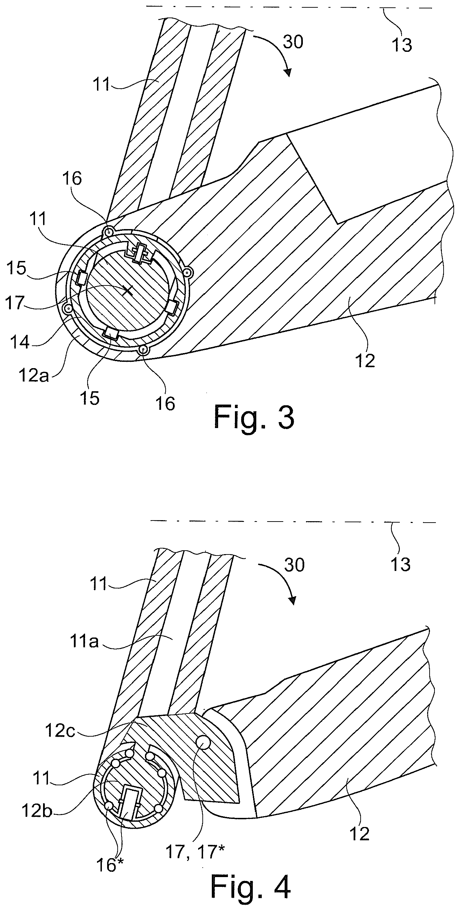

In den Figuren 3, 4 sind zwei mögliche Varianten eines kippbaren Lenkrads in einer Ausführungsform mit feststehender Speiche ausschnittsweise sowie im Schnitt gezeigt; die jeweilige Schnittebene liegt in Fzg.-Längsrichtung und Vertikalrichtung in dieser Speiche, welche sich hier vorteilhafterweise in einer zur Längsachse des Fahrzeugs parallelen und sich in Vertikalrichtung erstreckenden enthaltenden Ebene ausgehend von ihrem Befestigungspunkt an der Armaturentafel zumindest auch in Vertikalrichtung nach unten erstreckt.

Zunächst auf Figur 1a Bezug nehmend erkennt man hierin einen in der nicht weiter dargestellten Armaturentafel A eines Personenkraftwagens angeordneten Bordmonitor 20, auf dem verschiedene Anzeigen dargestellt sind, so wie sich dies für den Fahrer des Personenkraftwagens bildlich darstellt; oberhalb des Bordmonitors 20 sowie der Armaturentafel A befindet sich wie üblich die Windschutzscheibe (nicht gezeigt). Zwischen dem Bordmonitor 20 und dem Fahrer, der sich an der Stelle des Betrachters dieser Fig.1a befindet, liegt wie üblich ein Lenkrad 10, welches wie üblich aus einem Lenkrad-Kranz 11 und hier nur einer einzigen Speiche 12 besteht, deren dem Lenkrad-Kranz 11 abgewandtes Ende in einem Befestigungspunkt B an der Armaturentafel befestigt ist. Sehr nahe dieses Befestigungspunktes B verlaufe die hier der Einfachheit halber nur durch ein Kreuz dargestellte Drehachse 13 des Lenkrads 10, die üblicherweise nur annähernd senkrecht zur vorliegenden Zeichenebene verläuft. Figur 1b zeigt die soweit erläuterten Elemente in Seitenansicht.

Ein Vergleich von Fig.1b mit Fig.2b zeigt, dass beim Zustand nach Fig.2b der Lenkrad-Kranz 11, welcher auf später noch näher beschriebene Weise am diesem zugewandten Ende der hier feststehenden Speiche 12 verdrehbar geführt ist, mit seinem oberen, d.h. dem in Fig.1a oberhalb der Speiche 12 liegenden und dabei den Bordmonitor 20 teilweise verdeckenden Abschnitt quasi nach unten (gemäß Pfeil 30) weggeklappt oder gekippt ist. Dieses Kippen oder Wegklappen um das dem Lenkrad-Kranz 11 zugewandte Ende der Speiche 12 gibt dann für den Fahrer den Blick auf den Bordmonitor 20 vollständig frei, wie Fig.2a zeigt.

Wie vor der Figurenbeschreibung ausführlich erläutert wurde, befindet sich das Lenkrad 10 dann in der in den Figuren 2a, 2b dargestellten Position, wenn das mit diesem Lenkrad 10 ausgerüstete Fahrzeug in einem autonomen bzw. hochautomatisierten Fahrmodus bewegt wird. Bei solchem autonomen Fahren folgt das Fahrzeug selbsttätig einer vorgegebenen Fahrspur, ohne dass der Fahrer selbst lenken muß; dabei kann jedoch der Fahrer wenn er will, selbst aktiv lenken, d.h. weiterhin mit dem Lenkrad 10 einen Lenkwunsch vorgeben. Den besagten Modus des autonomen Fahrens schaltet der Fahrer dabei ausgehend von einer Position des Lenkrads 10 gemäß den Figuren 1a, 1b dadurch ein, dass der Fahrer das Lenkrad 10 in die in den Figuren 2a, 2b dargestellte Position gemäß Pfeil 30 kippt. Entsprechend kann der Fahrer ausgehend von der Position des Lenkrads 10 gemäß den Figuren 2a, 2b den Modus des autonomen Fahrens dadurch ausschalten und wieder selbst vollständig die Führung des Fahrzeugs übernehmen, indem er das Lenkrad 10 gegen Pfeilrichtung 30 in die in den Figuren 1a, 1b dargestellte Position zurück verschwenkt.

Fig.3 zeigt in einem Schnitt eine erste mögliche Ausführungsform, wie der Kranz 11 eines Lenkrads 10 auf einer feststehenden, d.h. nicht verlagerbaren Speiche 12 gelagert sein kann. Die zeichnerische Schnittebene liegt dabei in der Speiche 12 und es ist lediglich ein speichennaher Abschnitt des Lenkrad-Kranzes 11 dargestellt. Wie ersichtlich ist dabei der Lenkrad-Kranz 11 durch eine ringförmige Kranz-Führungshülse 14 hindurchgeführt und gegenüber dieser über hier vier Rollenwälzlagerkörper 15 derart gelagert, dass der Lenkrad-Kranz 11 um die in der Zeichenebene liegende und näherungsweise horizontal verlaufende Lenkrad-Drehachse 13 verdreht werden kann, wobei die für den Betrachter der Figur sichtbare Schnittfläche des Kranzes 11 aus der Zeichenebene heraus zum Betrachter hin oder vom Betrachter weg bewegt wird. Die besagte Kranz-Führungshülse 14 ihrerseits ist über mehrere - in der vorliegenden Schnittebene vier - Kugelwälzlagerkörper 16 in einem ein Segment eines Torus bildenden Führungsendabschnitt 12a der Speiche 12 (an deren freien bzw. dem Kranz 11 zugewandten Ende) derart gelagert, dass der Lenkrad-Kranz 11 gemäß Pfeil 30 (wie anhand der Figuren 1a, 1b, 2a, 2b erläutert wurde) gekippt bzw. verschwenkt werden kann. Damit ist also die Kranz-Führungshülse 14 um eine parallel zu einer an den Lenkrad-Kranz 11 im Schnittpunkt mit der Speichen-Längsachse angelegten Tangente verlaufende Schwenkachse 17, die in Fig.3 senkrecht zur Zeichenebene durch den Mittelpunkt der sichtbaren Schnittfläche des Kranzes 11 verläuft, verschwenkbar.

Fig.4 zeigt in einem Schnitt eine zweite mögliche Ausführungsform, wie der Kranz 11 eines erfindungsgemäßen Lenkrads 10 auf einer feststehenden, d.h. nicht verlagerbaren Speiche 12 gelagert sein kann. Die zeichnerische Schnittebene liegt (abermals) in der Speiche 12 und es ist lediglich ein speichennaher Abschnitt des Lenkrad-Kranzes 11 dargestellt. Wie ersichtlich ist der Lenkrad-Kranz 11 hohl ausgeführt und auf einem ein Kreisringsegment beschreibenden Führungsendabschnitt 12b der Speiche 12 um die Drehachse 13 des Lenkrads 10, welche bei diesem Ausführungsbeispiel ebenso liegt wie beim Beispiel nach Fig.3, verdrehbar geführt. Dieser Führungsendabschnitt 12b ist über einen Steg 12c, für dessen Durchtritt durch den Lenkrad-Kranz 11 am Innenumfang dieses Lenkrad-Kranzes 11 eine umlaufende Aussparung 11a vorgesehen ist, mit dem feststehenden Abschnitt der Speiche 12 derart gelenkig verbunden, dass der Führungsendabschnitt 12b und damit auch der Lenkrad-Kranz 11 um eine parallel zu einer an den Lenkrad-Kranz 11 im Schnittpunkt mit der Speichen-Längsachse angelegten Tangente verlaufende Schwenkachse 17, die (auch) in Fig.4 senkrecht zur Zeichenebene, hier jedoch durch den gelenkigen Anlenkpunkt 17* des Führungsendabschnittes 12b am feststehenden Abschnitt der Speiche 12 verläuft, verschwenkbar ist. Dabei ist ähnlich dem vorhergehenden Ausführungsbeispiel der Lenkrad-Kranz 11 über mehrere Wälzlagerkörper 16* auf dem Führungsendabschnitt 12b gelagert, jedoch kann dies sowie eine Vielzahl weiterer Details insbesondere konstruktiver Art durchaus abweichend von obigen Erläuterungen gestaltet sein, ohne den Inhalt der Patentansprüche zu verlassen.

Der Vollständigkeit halber sei noch erwähnt, dass das in den vorliegenden Figuren gezeigte Lenkrad 10 ein solches für ein sog. (und dem Fachmann bekanntes) steer-by-wire-System des Kraftfahrzeugs ist, d.h. hier gibt es keine mechanische Wellen-Verbindung zwischen dem Lenkrad 10 und den lenkbaren Rädern des Fahrzeugs und es wird der Lenkwunsch des Fahrers am Lenkrad auf elektronische Weise mittels einer geeigneten hier nicht gezeigten Sensorik zwischen dem Lenkrad-Kranz 11 und der Speiche 12 ermittelt. Alternativ hierzu ist die vorliegende Erfindung jedoch durchaus auch mit einem mechanisch (über eine Lenk-Welle) letztlich auf die lenkbaren Fahrzeug-Räder einwirkenden Lenkrad darstellbar, wobei die oder eine Speiche(n) kippbar oder verschwenkbar sein können.

## Patentansprüche

1. Anordnung eines Lenkrads in einem für autonomes Fahren geeigneten Kraftfahrzeug, wobei ein Lenkrad-Kranz (11) des Lenkrads (10) aus einer Gebrauchsposition in eine Ruhelage verlagerbar ist, in welcher der Fahrer des Fahrzeugs weiterhin einen Lenkwunsch durch Verdrehen des Lenkrad-Kranzes (11) vorgeben kann und wobei ein Verlagern des Lenkrad-Kranzes (11) aus der Gebrauchsposition in die Ruhelage einen autonomen Fahrzeug-Betriebsmodus, in welchem sich das Fahrzeug ohne Zutun des Fahrers entlang der Fahrbahn bewegt, einschaltet, während ein Verlagern des Lenkrad-Kranzes (11) aus der Ruhelage in die Gebrauchsposition diesen autonomen Fahrzeug-Betriebsmodus ausschaltet,
**dadurch gekennzeichnet, dass** der Lenkrad-Kranz (11) des Lenkrads (10) verschwenkbar oder kippbar an einer feststehenden Speiche (12) des Lenkrads (10) angebracht ist.

2. Lenkrad-Anordnung nach Anspruch 1, **dadurch gekennzeichnet, dass** der hohl ausgebildete Lenkrad-Kranz (11) auf einem Führungsendabschnitt (12b) der feststehenden Speiche (12) um die oder eine Drehachse (13) des Lenkrads (10) verdrehbar geführt ist, welcher Führungsendabschnitt (12b) seinerseits um eine parallel zu einer an den Lenkrad-Kranz (11) im Schnittpunkt mit einer Speichen-Längsachse angelegten Tangente verlaufende Schwenkachse (17) verschwenkbar ist.

3. Lenkrad-Anordnung nach Anspruch 1, **dadurch gekennzeichnet, dass** der Lenkrad-Kranz (11) innerhalb einer Kranz-Führungshülse (14) um die oder eine Drehachse (13) des Lenkrads (10) verdrehbar geführt ist, welche Kranz-Führungshülse (14) ihrerseits in einem Führungsendabschnitt (12a) der feststehenden Speiche (12) um eine parallel zu einer an den Lenkrad-Kranz (11) im Schnittpunkt mit der Speichen-Längsachse angelegten Tangente verlaufende Schwenkachse (17) verschwenkbar ist.

4. Lenkrad-Anordnung nach einem der vorangegangenen Ansprüche, wobei das Lenkrad (10) in der Gebrauchsposition eine erste Ebene beschreibt, welche mit einer durch die Ruhelage gebildete zweite Ebene einen Winkel in der Größenordnung von 30° bis 100° einschließt.

5. Lenkrad-Anordnung nach Anspruch 4, wobei die erste Ebene der Gebrauchsposition zumindest annähernd vertikal und die zweite Ebene der Ruheposition zumindest annähernd horizontal ausgerichtet ist und der Lenkrad-Kranz (11) verschwenkbar oder kippbar am einer Nabe des Lenkrads oder einem Befestigungspunkt einer Speiche an einer Armaturentafel abgewandten Ende einer oder der Speiche (12) des Lenkrads angebracht (10) ist, welche in Neutralstellung des Lenkrads (10) in einer zur Längsachse des Fahrzeugs parallelen und sich in Vertikalrichtung erstreckenden und die Lenkrad-Drehachse (13) enthaltenden Ebene zumindest auch in Vertikalrichtung nach unten verläuft.

6. Lenkrad-Anordnung nach einem der vorangegangenen Ansprüche, mit einer Sperrvorrichtung, welche ein manuelles Verlagern des Lenkrads (10) durch den Fahrer aus der Gebrauchsposition in die Ruhelage nur dann zulässt, wenn ein autonomer Fahrmodus möglich oder das Fahrzeug abgestellt ist.

## Claims

1. An arrangement of a steering wheel in a motor vehicle suitable for autonomous driving, wherein a steering-wheel rim (11) of the steering wheel (10) is displaceable from a usage position into an idle position, in which the driver of the vehicle can still specify a steering request by rotating the steering-wheel rim (11), and wherein the displacement of the steering-wheel rim (11) from the usage position into the idle position switches on an autonomous vehicle operating mode, in which the vehicle moves along the roadway without assistance from the driver, whereas displacement of the steering-wheel rim (11) from the idle position into the usage position switches off this autonomous vehicle operating mode,
**characterised in that** the steering-wheel rim (11) of the steering wheel (10) is attached pivotably or tiltably to a stationary spoke (12) of the steering wheel (10).

2. A steering wheel arrangement according to claim 1, **characterised in that** the steering-wheel rim, which is of hollow design, is guided on a guide end portion (12b) of the stationary spoke (12) so as to be rotatable about the, or an, axis of rotation (13) of the steering wheel (10), which guide end portion (12b) is itself pivotable about a pivot axis (17) which runs parallel to a tangent to the steering-wheel rim (11) at the point of intersection with a spoke longitudinal axis.

3. A steering wheel arrangement according to claim 1, **characterised in that** the steering-wheel rim (11) is guided within a rim guide sleeve (14) so as to be rotatable about the, or an, axis of rotation (13) of the steering wheel (10), which rim guide sleeve (14) is in turn pivotable, in a guide end portion (12a) of the stationary spoke (12), about a pivot axis (17) running parallel to a tangent to the steering-wheel rim (11) at the point of intersection with the spoke longitudinal axis.

4. A steering wheel arrangement according to any one of the preceding claims, wherein the steering wheel (10), in the usage position, describes a first plane which encloses an angle in the order of magnitude of from 30° to 100° with a second plane formed by the idle position.

5. A steering wheel arrangement according to claim 4, wherein the first plane of the usage position is oriented at least approximately vertically and the second plane of the idle position is oriented at least approximately horizontally, and the steering-wheel rim (11) is attached pivotably or tiltably to that end of a, or the, spoke (12) of the steering wheel (10) which is remote from a hub of the steering wheel or a fastening point of a spoke to a dashboard, which spoke, in a neutral position of the steering wheel (10), extends downward in a vertical direction in a plane which extends parallel to the longitudinal axis of the vehicle and also in the vertical direction and which contains the steering wheel axis of rotation (13).

6. A steering wheel arrangement according to any one of the preceding claims, comprising a blocking device configured to permit a manual displacement of the steering wheel (10) by the driver from the usage position into the idle position only if the autonomous driving mode is possible or if the vehicle is parked.

## Revendications

1. Agencement d'un volant de direction dans un véhicule adapté à une conduite autonome, la couronne (11) du volant de direction (10) pouvant être déplacée d'une position d'utilisation à une position de repos dans laquelle le conducteur du véhicule peu encore définir un souhait de direction par rotation de la couronne (11) du volant de direction, et, un déplacement de la couronne (11) du volant de direction de la position d'utilisation à la position de repos enclenche un mode de fonctionnement autonome dans lequel le véhicule se déplace le long de la voie de circulation sans action du conducteur alors qu'un déplacement de la couronne (11) du volant de direction de la position de repos à la position d'utilisation coupe ce mode de fonctionnement autonome du véhicule,
**caractérisé en ce que**
la couronne (11) du volant de direction (10) est montée de façon à pouvoir pivoter ou basculer sur un rayon fixe (12) du volant de direction (10).

2. Agencement de volant de direction conforme à la revendication 1,
**caractérisé en ce que**
la couronne (11) du volant de direction qui est creuse est mobile en rotation sur un segment d'extrémité (12b) du rayon fixe (12), autour du ou d'un axe de rotation (13) du volant de direction (10), et le segment d'extrémité de guidage (12b) est quant à lui susceptible de pivoter autour d'un axe de pivotement (17) s'étendant parallèlement à la tangente tracée sur la couronne (11) du volant de direction au point d'intersection avec l'axe longitudinal du rayon.

3. Agencement de volant de direction conforme à la revendication 1,
**caractérisé en ce que**
la couronne (11) du volant de direction est mobile en rotation à la partie interne d'un manchon de guidage (14) autour du ou d'un axe de rotation (13) du volant de direction (10), et le manchon de guidage (14) de la couronne est quant à lui susceptible de pivoter dans un segment d'extrémité de guidage (12a) du rayon fixe (12) autour d'un axe de pivotement (17) s'étendant parallèlement à la tangente tracée sur la couronne (11) du volant de direction au point d'intersection avec l'axe longitudinal du rayon.

4. Agencement de volant de direction conforme à l'une des revendications précédentes,
dans lequel
le volant de direction (10) décrit dans la position d'utilisation un premier plan qui définit avec un second plan formé par la position de repos un angle de l'ordre 30° à 100°.

5. Agencement de roue de direction conforme à la revendication 4,
dans lequel
le premier plan de la position d'utilisation est orienté au moins approximativement verticalement et le second plan de la position de repos est orienté au moins approximativement horizontalement, et, la couronne (11) du volant de direction est montée pivotante ou basculante sur un moyeu de volant de direction ou un point de fixation d'un rayon à l'extrémité opposée au tableau de bord d'un ou du rayon (12) du volant de direction (10) qui, dans la position neutre du volant de direction (10) s'étend au moins vers le bas en direction verticale dans un plan parallèle à l'axe longitudinal du véhicule, s'étendant également en direction verticale et refermant l'axe de rotation (13) du volant de direction (10).

6. Agencement de volant de direction conforme à l'une des revendications précédentes,
comprenant un dispositif de blocage qui ne permet un déplacement manuel du volant de direction (10) par le conducteur de la position d'utilisation à la position de repos que lorsque un mode de conduite autonome est possible ou que le véhicule et à l'arrêt.
